# EUROPEAN PATENT SPECIFICATION

(11) **EP 1 754 624 B1**
(45) Date of publication and mention of the grant of the patent: **23.03.2011**
(21) Application number: 06014722.0
(22) Date of filing: 14.07.2006
(51) Int. Cl.: B60N 2/26

(54) **Child seat**
Kindersitz
Siège d'enfant

(30) Priority: 18.08.2005 JP 2005237882
(43) Date of publication of application: 21.02.2007
(73) Proprietor: TAKATA CORPORATION, Minato-ku, Tokyo 106-8510 (JP)
(72) Inventor: Sakumoto, Masayuki, Tokyo 106-8510 (JP)
(74) Representative: Banzer, Hans-Jörg

(56) References cited:
- EP-A- 0 287 259
- EP-A- 1 167 115
- EP-A- 1 433 653
- EP-A- 1 564 065
- US-B1- 6 820 939

## Description

### [Technical Field]

The present invention relates to a child seat provided on the seat of the vehicle and the like, particularly, to the child seat having height adjusting means for a webbing laid on a child sitting on the child seat.

### [Background Art]

A child sitting on a child seat is restrained with the child seat by a webbing provided on the child seat.

In the Japanese Unexamined Patent Application Publication No. 2004-331055, there is disclosed a child seat, in which a sliding member having webbing inserting holes (hereinafter, referred to as a locking body) is provided on a backrest portion of the child seat to vertically move, and the height of the webbing can by adjusted by moving the sliding member.

In EP 0 287 259 A2 which shows the features of the preamble of claim 1, a child seat for a motor vehicle is described. In the backrest portion, a carriage is mounted so as to be slideable with respect to the back portion in a vertical direction. The position of the carriage can be varied using a control means in the form of a knob coupled with a screw-threaded rod or a thumb-wheel coupled to a drum for winding a webbing strap. These types of control means are located on the upper end of the back portion.

In EP 1 433 653 A2, a child seat is described which includes a harness-control panel which is moveable in a vertical direction relative to a seat shell. For allowing an adjustment of the panel height from the front side of the seat, actuators are provided on the upper end of the harness-control panel.

In EP 1 167 115 A1, a child seat is described, in which a backrest includes a central piece which can move vertically with respect to the rest of the backrest. Movement of the central piece is obtained by means of operating knobs arranged on the rear side of the backrest.

In EP 1 564 065 A2, a child seat is described in which the height of webbings can be adjusted from either the front or rear side. This is obtained by means of manipulation pieces which protrude through an opening to the front side of a backrest.

In US 6,820,939 B1, a child seat is described, in which a belt support member is moveable in a vertical direction. Movement of the belt support member is controlled by means of an actuator which is arranged substantially at the centre of the backrest.

### [Disclosure of the Invention]

### [Problems to be Solved by the Invention]

In the child seat of Japanese Unexamined Patent Application Publication No. 2004-331055, the height of a webbing can be adjusted only from the rear side of a backrest portion. Accordingly, when the child seat is fixed toward a front side of the vehicle seat, the height adjustment of the webbing cannot be performed or is considerably difficult to operate.

The object of the present invention is to provide the child seat which can easily adjust the height of the webbing from the side of the backrest portion.

### [Means for Solving the Problems]

This object is achieved by a child seat according to claim 1. The dependent claims define preferred and advantageous embodiments of the invention.

In the child seat of the present invention, a movable body for changing the height of a sliding member is operable to move from the side of a backrest portion. Accordingly, even when the child seat is provided toward the front side of the vehicle seat and the like, it is possible to easily adjust the height of the webbing.

According to an embodiment, the guide rail includes a plurality of locking parts vertically provided at intervals and a vertically extending rack is provided, the movable body includes a pinion to be engaged with the rack, a handle connected to the pinion, an engaging body for locking the movable body by engaging with the locking part, and an operating piece for engaging and disengaging the engaging body and the locking part, and the handle and the operating piece protrude from the side of the backrest portion to operate.

In the child seat of this embodiment, by engaging a locking portion and an engaging portion by means of the operation an operating piece, it is possible to lock the movable body in a desired height. By disengaging both locking portion and engaging portion, it is possible to move the sliding member and all of the movable bodies vertically. Under this state, when the handle is turned, the movable body and the sliding member move vertically. After moving in the desired height, the movable body is locked by operating the operating piece. Therefore, in this embodiment, it is possible to very easily adjust the height of the sliding member.

According to an embodiment, the webbing inserting hole and the handle are disposed in approximately same height.

In the child seat of this embodiment, since the webbing inserting hole and the handle are disposed in substantially same height, it is possible to know the height of the webbing inserting hole directly from the height of the handle when adjusting the height of the webbing, whereby it is very convenient.

According to an embodiment, the guide rail and the movable body are respectively provided on the right and left of the backrest portion and an interlocking member for interlocking the left movable body and the right movable body is provided.

In the child seat of this embodiment, since the left and right movable bodies are interlocked, even when it is operated only from the left side or only from the right side of the child seat, it is possible to move the movable bodies on both sides smoothly.

### [Brief description of the Drawings]

Fig. 1(a) is a front perspective view of a seat main body of a child seat in accordance with an embodiment of the present invention, and Fig. 1(b) is a rear perspective view thereof.
Fig. 2 is a perspective view of a guide rail and a movable body.
Fig. 3(a) is a horizontal cross-sectional view of a guide rail, and Figs. 3(b) and 3(c) are cross-sectional views taken along lines B-B and C-C in Fig. 3(a), respectively.
Fig. 4 is an exploded perspective view of a movable body.
Fig. 5 is an exploded perspective view showing the movable body.
Fig. 6 is an exploded perspective view of a movable body. [Name of Document]

### [Best Mode for Carrying Out the Invention]

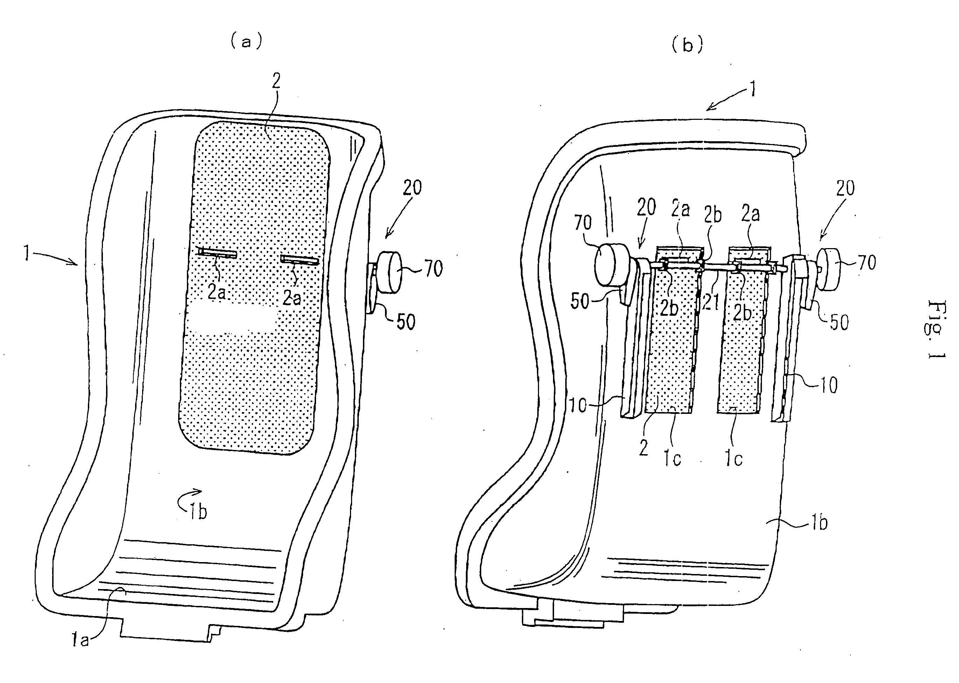

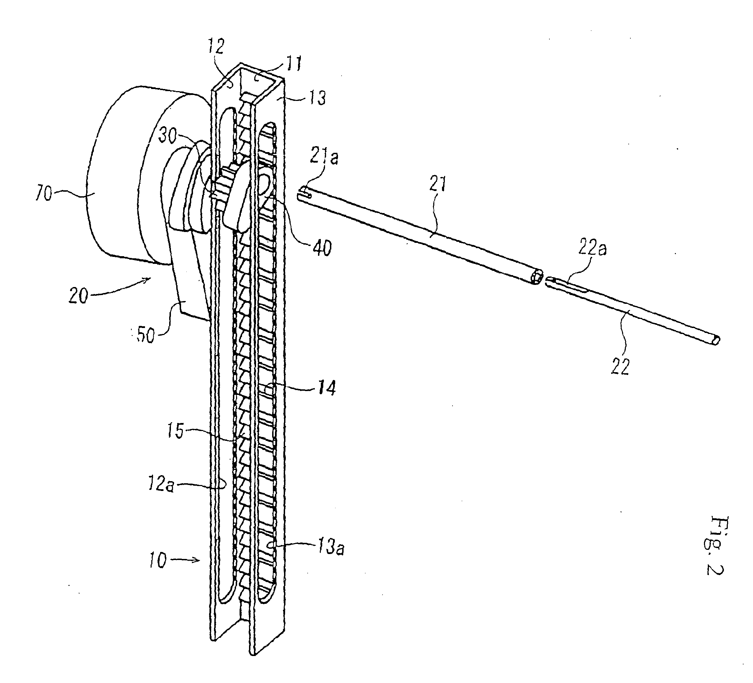

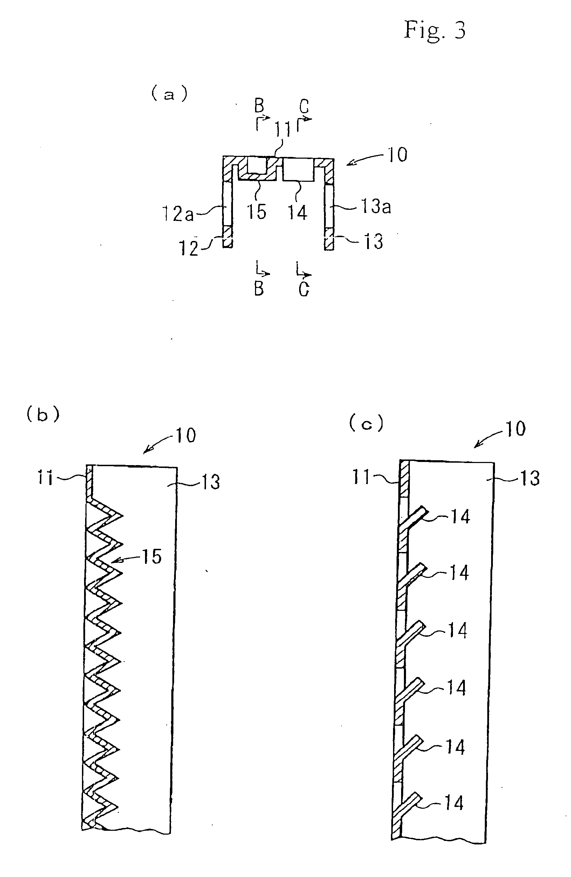

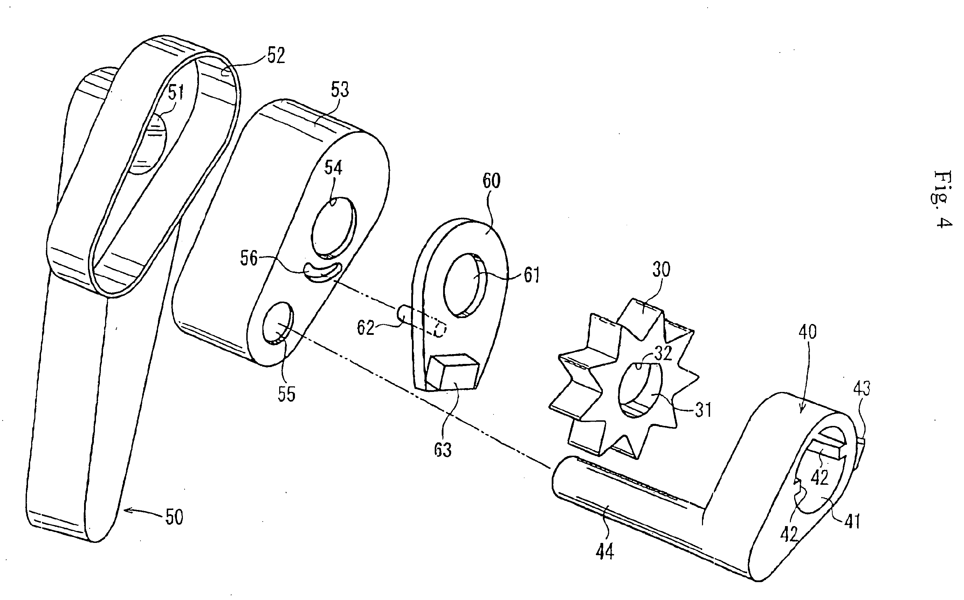

Hereinafter, an embodiment of the invention will be explained with reference to drawings. Fig. 1(a) is a front perspective view of a seat main body of a child seat according to an embodiment, and Fig. 1(b) is a rear perspective view of thereof. Fig. 2 is a perspective view of a guide rail and a movable body. Fig. 3(a) is a horizontal cross-sectional view of a guide rail and Figs. 3(b) and 3(c) are cross-sectional views taken along line B-B and C-C in Fig. 3(a), respectively. Figs. 4, 5 and 6 are exploded perspective views of a movable body.

The seat main body 1 has a seat portion 1a and a backrest portion 1b. The seat main body 1 consists of the child seat mounted on the base member (not shown) to be reclined.

In the backrest portion 1b, vertically extending perforated holes 1c are provided on the right side and on the left side respectively. In order to block the perforated holes, a sliding main body or a sliding member 2 of a plate shape is provided on the front side of the backrest portion 1b. On the sliding member 2, there is provided a webbing inserting hole 2a to insert the webbing for restraining children.

On the rear surface of the sliding member 2, projecting pieces 2b for supporting a shaft are protruding rearwards on the closest portion of the webbing inserting hole 2a. The projecting piece 2b protrudes to the rear side of the backrest portion 1b along the perforated holes 1c. A circular hole is formed in the inside of the projecting piece 2b, and a lever interlocking column 21 and a handle interlocking shaft 22 described below are inserted into the circular hole. Therefore, when the column 21 and the shaft 22 move vertically, the sliding member 2 moves vertically as well. Further, as shown in Fig. 1(b), the webbing inserting holes 2a and the handles 70 on both sides of the shaft 22 are positioned at substantially the same height.

On both sides on the rear surface of the backrest portion 1b, guide rails 10 are mounted so as to extend vertically.

As shown in Figs. 2 and 3, the guide rail 10 has a main plate part 11 overlapped on the backrest portion 1b and side plates portions 12 and 13 standing along both sides of the main plate, and the cross-sectional view of the guide rail is U-shaped.

On the main plate portion 11, a number of obliquely erected fragmented locking teeth 14 is provided at predetermined intervals vertically as the locking portion. Further, on the main plate portion 11, a rack 15 is vertically provided. On the side plate portions 12 and 13, vertically extending slots (long hole) 12a and 13a are provided.

The movable body 20 is mounted on the guide rail 10 so as to move vertically along the guide rail 10.

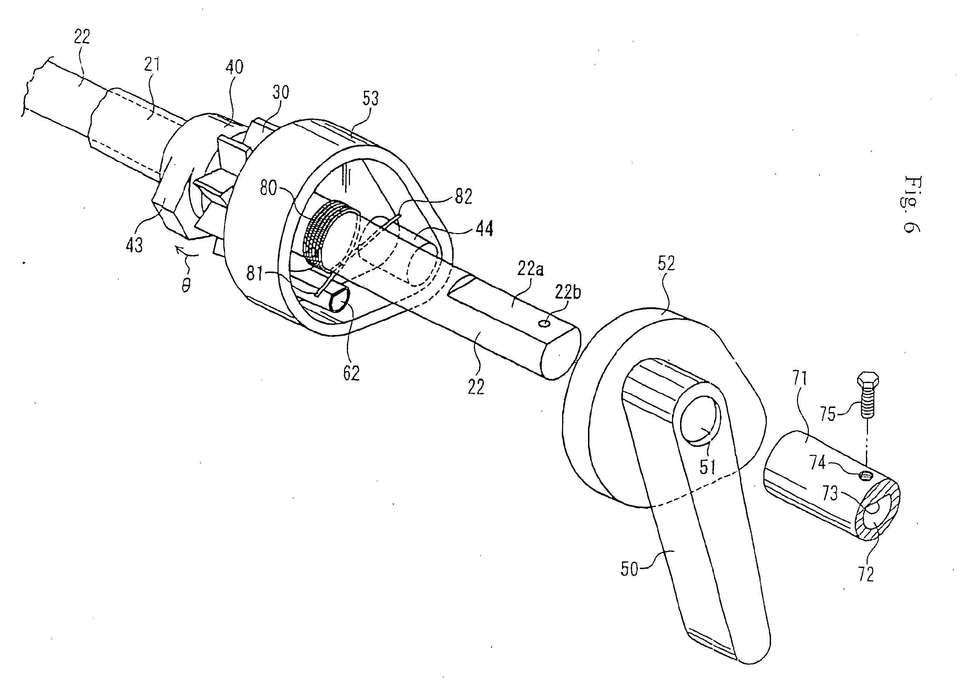

As shown in Figs. 4 to 6, the movable body 20, includes the lever interlocking column 21, the handle interlocking shaft 22, a pinion 30 engaged with the rack 15, the engaging body 40 engaged with the locking teeth 14, a lever 50 as an operating piece for disengaging the engaging body 40 and the locking teeth 14, a retracting spring 80 (Fig. 6) for biasing the engaging body 40 in the direction of engaging with the locking teeth 14, a spring accepting slider 60 for receiving one end portion of the retracting spring 80 for generating the bias strength and for sliding along the outside surface of the side plate portions 12 and 13 of the guide rail 10, and the handle 70 for rotating the pinion 30.

The handle interlocking shaft 22 is smaller in diameter and longer than the lever interlocking column 21. It is inserted into the column 21 and its both ends protrude from the both ends of the column. As specifically described later, the handle interlocking shaft 22 is inserted into the respective holes of the engaging body 40, the pinion 30, the spring accepting slider 60, the sub-lever 53 and the lever 50, and a boss portion of the handle 70. On both ends of the shaft 22, there are provided planar surface portions 22a (Figs. 2 and 6) having a shape which is cut in a chordal direction, and a female screw 22b (Fig. 6) is provided on the plane surface portion 22a.

In a shaft hole 31 of the pinion 30, there is provided the chordal direction portion 32 having a planar shape which is engaged with the planar surface portion 22a. Therefore, the shaft 22 and the pinion 30 integrally rotate at all times.

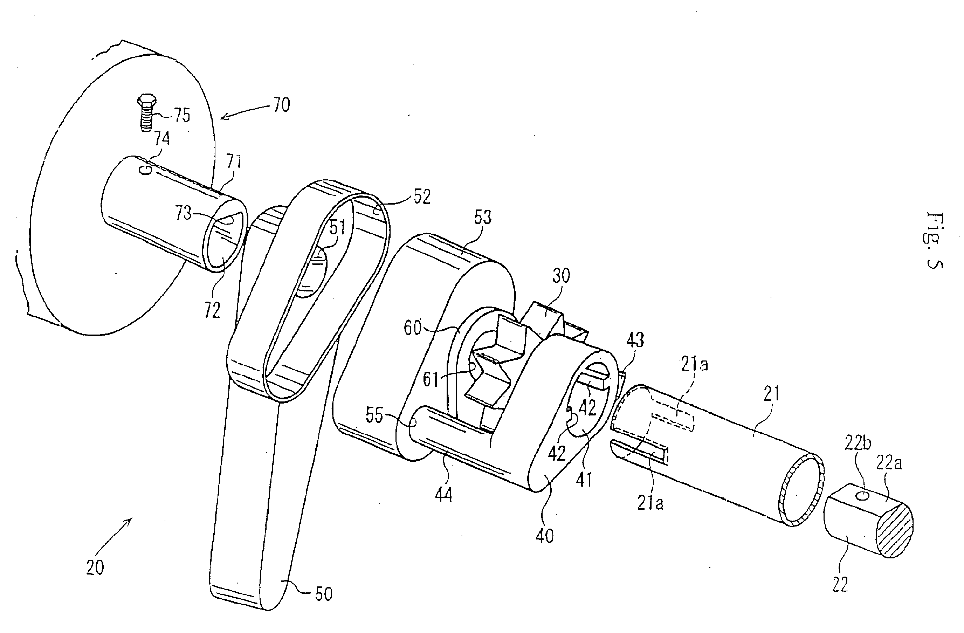

The engaging body 40 has a teardrop shape substantially from a side view and the shaft hole 41 into which the lever interlocking column 21 is inserted. On both ends of the column 21, slots 21a (Figs. 2 and 5) on two places facing along in the diameter direction are extensively provided in a direction parallel to the shaft center line. In the inner peripheral face of the shaft hole 41 of the engaging body 40, there are provided two pieces of concaves 42 and 42 engaged with the slots 21a. Each of the concaves 42 and 42 is faced along in the diameter direction and extends in a direction parallel to the shaft center line of the shaft hole 41.

From the outer peripheral surface of the engaging body 40, a latch 43 for engaging the engaging tooth 14 of the guide rail 10 protrudes. The engaging body 40 is extensively provided in a direction opposite to the latch 43 by being inserted in the shaft hole 41, and a link pin 44 protrudes from the end of the extensive protrusion direction. The link pin 44 extends in a direction parallel to the shaft center line of the shaft hole 41. The link pin 44 is inserted into the pin inserting hole 55 of a sub-lever 53 described below.

The lever 50 has the shaft hole 51 into which the shaft 22 is inserted. The lever 50 extends in a direction perpendicular to the shaft center line of the shaft hole 51.

On the lever 50, a frame portion 52 surrounding the shaft hole 51 is provided and the sub-lever 53 is engaged in the frame portion 52. On the sub-lever 53, the shaft hole 54 into which the shaft 22 is inserted is provided. On the peripheral border of the shaft hole 54, the shaft hole 54 and a circular long hole 56 having a concentric shape are provided. On the sub-lever 53, the pin inserting hole 55 spaced from the shaft hole 54 is provided.

The spring accepting slider 60 is a plate-shaped member having the circular shaft hole 61 into which the shaft 22 is inserted and a spring accepting pin 62 horizontally projecting to the shaft center line of the shaft hole 61 protrudes on the plate face of one side. The pin 62 is inserted into the long hole 56 of the lever 50. Further, on the plate surface of the other side, the concave portions 63 protrude, which are slidably engaged in the slots 12a or 13a of the guide rail 10. By engaging the concave portion 63 on the slots 12a or 13a, the spring accepting slider 60 does not rotate and moves vertically along the guide rail 10.

The handle 70 has an substantially disk shape and, as shown in Fig. 5, a handle portion 71 having a cylinder shape protrudes in the center of the plate face of the one side. The shaft 22 is inserted into an inner hole 72 of the boss portion 71. In the inner hole 72, the planar shaped chordal direction portion 73 which is engaged with the planar surface portion 22a of the shaft 22 is provided. Thus, the handle 70 and the shaft 22 integrally rotate at all times.

In the boss portion 71, there is provided the inserting hole 74 of a lock bolt 75.

As shown in Figs. 5 and 6, the engaging body 40, the pinion 30, the sub-lever 53, the spring accepting slider 60, and each of shaft holes 41, 31, 61, 54 and 51 of the lever 50 are provided on the same shaft, and the boss portion 71 of the handle 70 is provided on the same shaft as well. The shaft 22 is inserted into those of shaft hole 41, 31, 61, 54 and 51 and the inner hole 71 of boss portion, and the lock bolt 75 is inserted into the female screw 22b through the hole 74, whereby the handle 70 and the shaft 22 are fixed. As shown in Fig. 5, in the column 21 in which the shaft 22 is circumscribed, the end portion of the column is inserted into the shaft hole 41 of the engaging body 40, and the slot 21a is engaged with the concave 42, whereby the engaging body 40 and the column 21 are unified.

As shown in Fig. 6, a link pin 44 of the engaging body 40 is inserted into the pin inserting hole 55 of the sub-lever 53 and protrudes in the inside of the sub-lever 53. Therefore, the engaging body 40 and the sub-lever 53 and the lever 50 integrally rotate at all times.

The spring accepting pin 62 of the spring accepting slider 60 protrudes in the inside of the sub-lever 53 with passing through the circular long hole 56 of the sub-lever 53.

In the sub-lever 53, the retracting spring 80 is retracted on the shaft 22. One end 81 of the retracting spring 80 is stretched on the spring accepting pin 62 and the other end 82 thereof is stretched on the link pin 44. The spring 80 obtains a reaction force from the spring accepting pin 62, whereby the link pin 44 is arranged to be biased in clockwise direction in Fig. 6. Therefore, when the engaging body 40 rotates in counter direction to θ as shown in Fig. 6, the engaging body 40 is arranged to be biased in θ direction as shown in Fig. 6 by the spring 80.

As described above, the movable bodies 20 consisting of its engaging bodies 40 and the like are mounted on both ends of the shaft 22, respectively. Accordingly, the left and right handles 70 integrally rotate through the shaft 22 at all times. Further, on both ends of the column 21, the left and right engaging bodies 40 are engaged in both ends of the column 21, whereby the left and right engaging bodies 40 and the lever 50 integrally rotate through the column 21 at all times.

The method for controlling the height of the webbing of the child seat described above will be described below.

Under the state of hands-off from the lever 50, the engaging body 40 is arranged to be biased in the counter direction to θ in Fig. 6 by the spring 80 and the latch 43 is engaged on the engaging tooth 14. Accordingly, the movable body 20 is prevented from moving downward.

In case of moving the movable body 20, first, the lever 50 is turned in the counterclockwise direction (in the counter direction to θ) as shown in Fig. 6. Therefore, the engaging body 40 rotates through the link pin 44 in the counter direction to θ and the latch 43 is taken off from the engaging tooth 14, whereby the movable body 20 can move vertically. Further, since the left and right engaging bodies 40 are interlocked through the column 21, operating the levers on any one of the left and right sides enables the latch 43 of the left and right engaging bodies 40 to be taken off from the engaging tooth 14 of each guide rail 10.

By turninq the handle 70, rotating the pinion 30, moving the movable body 20 vertically, being hands-off from the lever 50 at the desired height and engaging the latch 43 on the engaging tooth 14, the movable body 20 is locked. In addition, since each of the left and right pinions 30 is interlocked and rotates through the shaft 22, the left and right movable bodies 20 move smoothly along each of the guide rails 10. The lever 50 and the handle 70 protrude from both left and right sides and operable conveniently from the left and right sides.

Further, in this embodiment, since the height of the webbing inserting hole 2a is substantially the same as the height of the handle 70, the height of the webbing inserting hole 2a can be seen directly from the height of the handle 70, whereby the height control of the webbing can be easily performed.

Further, in case that the movable body 20 is raised, the handle 70 may be turned in the counterclockwise direction without operating the lever 50 as shown in Fig. 6. The latch 43 is pushed toward the inclined lower surface of the engaging tooth 14 and rotates in the counter direction to θ, whereby it moves along the surface of the engaging tooth 14 and is engaged in the engaging tooth 14 on the upper side.

The embodiment is one example of the present invention and the invention may take a form other than the drawings.

## Claims

1. A child seat, comprising:
a main body (1) of the seat having a seat portion (1a) and a backrest portion (1b);
a sliding member (2) disposed at the backrest portion (1b) which is equipped with a webbing inserting hole (2a) ;
at least one vertically extending guide rail (10) mounted on the main body (1) of the seat; and
at least one movable body (20) mounted on the sliding member (2) which moves along the guide rail (10), wherein the movable body (20) is operable to move from the side of the backrest portion (1b) ,
wherein locking means (14, 40) are provided for locking the movable body (20) in a desired height;
wherein at least one handle (70) is provided for moving the movable body (20) in the vertical direction; and
wherein at least one operating piece (50) is provided for operating the locking means (14, 40);
**characterized in that** the handle (70) and the operating piece (50) protrude from the side of the backrest portion (1b) so as to be operable.

2. The child seat according to Claim 1,
wherein the guide rail (10) and the movable body (20) are respectively provided on the right side and left side of the backrest portion (1b) ; and
wherein an interlocking member (21, 22) for interlocking the left movable body and the right movable body is provided.

3. The child seat according to any one of the preceding claims,
wherein a first handle (70) and a first operating piece (50) protrude from the right side of the backrest portion (1b) ; and
wherein a second handle (70) and a second operating piece protrude from the left side of the backrest portion (1b) .

4. The child seat according to any one of the preceding claims,
wherein the at least one guide rail (10) includes a plurality of locking parts (14) vertically provided at intervals and a vertically extending rack (15),
wherein the at least one movable body (20) includes a pinion (30) to be engaged with the rack (15), a handle (70) connected to the pinions (30), an engaging body (40) for locking the movable body (20) by engaging with the locking parts (14), and an operating piece (50) for engaging and disengaging the engaging body (40) and the locking parts (14), and
wherein the handle (70) and the operating piece (50) protrude from the side of the backrest portion (1b) so as to be operable.

5. The child seat according to any one of the preceding claims,
wherein the webbing inserting hole (2a) and the at least one handle (70) are disposed at substantially the same height.

## Patentansprüche

1. Kindersitz, umfassend:
einen Hauptteil (1) des Sitzes, welcher einen Sitzteil (1a) und einen Rückenlehnenteil (1b) enthält;
ein Gleitstück (2), welches mit einer Gurtband-Einführungsöffnung (2a) ausgestattet ist und welches an dem Rückenlehnenteil (1b) angeordnet ist;
mindestens eine vertikal verlaufende Führungsschiene (10), welche am Hauptteil (1) des Sitzes befestigt ist; und
mindestens ein bewegliches Teil (20) welches an dem Gleitstück (2) befestigt ist und welches sich entlang der Führungsschiene (10) bewegt, wobei das bewegliche Teil (20) geeignet ist, um von der Seite des Rückenlehnenteils (1b) bewegt zu werden,
wobei Blockiermittel (14, 40) dafür vorgesehen sind, um das bewegliche Teil (20) in einer gewünschten Höhe zu fixieren;
wobei mindestens ein Griff (70) dafür vorgesehen ist, um das bewegliche Teil (20) in vertikaler Richtung zu bewegen; und
wobei mindestens ein Bedienungselement (50) dafür vorgesehen ist, um die Blockiermittel (14, 40) zu betätigen;
**gekennzeichnet dadurch, dass** der Griff (70) und das Bedienungselement (50) von der Seite des Rückenlehnenteils (1b) herausragen, um bedienbar zu sein.

2. Kindersitz nach Anspruch 1,
wobei die Führungsschiene (10) und das bewegliche Teil (20) jeweils auf der rechten Seite und auf der linken Seite des Rückenlehnenteils (1b) vorgesehen sind; und
wobei ein Verriegelungselement (21, 22) dafür vorgesehen ist, um das linke bewegliche Teil mit dem rechten beweglichen Teil zu verriegeln.

3. Kindersitz nach einem der vorhergehenden Ansprüche,
wobei ein erster Griff (70) und ein erstes Bedienungselement (50) von der rechten Seite des Rückenlehnenteils (1b) herausragen; und
wobei ein zweiter Griff (70) und ein zweites Bedienungselement von der linken Seite des Rückenlehnenteils (1b) herausragen.

4. Kindersitz nach einem der vorhergehenden Ansprüche,
wobei die mindestens eine Führungsschiene (10) eine Anzahl von Blockierteilen (14), welche vertikal in Abständen vorgesehen sind und eine vertikal verlaufende Zahnstange (15) beinhaltet,
wobei das mindestens eine bewegliche Teil (20) ein Zahnrad (30), welches sich im Eingriff mit der Zahnstange (15) befindet, einen Griff (70), der mit dem Zahnrad (30) verbunden ist, ein Einrast-Teil (40) um das bewegliche Teil (20) durch Einrasten mit den Blockierteilen (14) zu fixieren, und ein Bedienungselement (50) um das Einrast-Teil (40) und die Blockierteile (14) einzurasten und auszukuppeln beinhaltet, und
wobei der Griff (70) und das Bedienungselement (50) von der Seite des Rückenlehnenteils (1b) herausragen, um bedienbar zu sein.

5. Kindersitz nach einem der vorhergehenden Ansprüche,
wobei die Gurtband-Einführungsöffnung (2a) und der mindestens eine Griff (70) etwa in der gleichen Höhe angeordnet sind.

## Revendications

1. Un siège d'enfant, comprenant:
un corps principal (1) de siège ayant une partie de siège (1a) et une partie de dossier (1b) ;
un élément coulissant (2), disposé au niveau de la partie de dossier (1b), équipé d'un orifice d'insertion de sangle (2a) ;
au moins un rail de guidage s'étendant verticalement (10) monté sur le corps principal (1) du siège ; et
au moins un corps mobile (20) monté sur l'élément coulissant (2) qui se déplace sur le rail de guidage (10), dans lequel le corps mobile (20) peut être actionné pour se déplacer à partir du côté de la partie de dossier (1b),
dans lequel des moyens de blocage (14, 40) sont prévus pour verrouiller le corps mobile (20) à une hauteur voulue ;
dans lequel au moins une poignée (70) est prévue pour déplacer le corps mobile (20) dans le sens vertical ; et
dans lequel au moins un organe d'actionnement (50) est prévu pour actionner les moyens de blocage (14, 40) ;
**caractérisé en ce que** la poignée (70) et l'organe d'actionnement (50) font saillie à partir du côté de la partie de dossier (1b) de manière à pouvoir être actionnés.

2. Le siège pour enfant selon la revendication 1,
dans lequel le rail de guidage (10) et le corps mobile (20) sont respectivement prévus sur le côté droit et côté gauche de la partie de dossier (1b), et
dans lequel un élément d'accrochage (21, 22) pour l'accrochage du corps mobile gauche et du corps mobile droit est prévu.

3. Le siège pour enfant selon l'une quelconque des revendications précédentes,
dans lequel une première poignée (70) et un premier élément d'actionnement (50) font saillie du côté droit de la partie de dossier (1b), et
dans lequel une deuxième poignée (70) et un deuxième élément d'actionnement font saillie du côté gauche de la partie de dossier (1b).

4. Le siège pour enfant selon l'une quelconque des revendications précédentes,
dans lequel le au moins un rail de guidage (10) comprend une pluralité d'organes de verrouillage (14) disposés verticalement à des intervalles et une crémaillère s'étendant verticalement (15),
dans lequel le au moins d'un corps mobile (20) comprend un pignon (30) destiné à être en prise avec la crémaillère (15), une poignée (70) reliée aux pignons (30), un élément d'engagement (40) pour verrouiller le corps mobile (20) en s'engageant avec les organes de verrouillage (14), et un organe d'actionnement (50) pour amener en prise et hors prise l'élément d'engagement (40) et les organes de verrouillage (14), et
dans lequel la poignée (70) et l'organe d'actionnement (50) font saillie à partir du côté de la partie de dossier (1b) de manière à pouvoir être actionnés.

5. Le siège pour enfant selon l'une quelconque des revendications précédentes, dans lequel l'orifice d'insertion de sangle (2a) et la au moins une poignée (70) sont disposés sensiblement à la même hauteur.
